# EUROPÄISCHE PATENTSCHRIFT

(11) **EP 2 592 287 B1**
(45) Veröffentlichungstag und Bekanntmachung des Hinweises auf die Patenterteilung: **29.03.2017**
(21) Anmeldenummer: 12182453.6
(22) Anmeldetag: 30.08.2012
(51) Int. Cl.: F16C 3/03

(54) **Teleskopwelle mit Zugelement**
Telescopic shaft with tension element
Arbre télescopique avec élément de traction

(30) Priorität: 09.11.2011 DE 102011055169
(43) Veröffentlichungstag der Anmeldung: 15.05.2013
(73) Patentinhaber: GKN Walterscheid GmbH, 53797 Lohmar (DE)
(72) Erfinder: Büth, Patrick, 53804 Much (DE); Beitzen, Thomas, 53721 Siegburg (DE)
(74) Vertreter: Müller, Thomas Michael

(56) Entgegenhaltungen:
- DE-A1- 2 952 029
- US-A- 73 914
- US-A1- 2006 094 516

## Beschreibung

Die Erfindung betrifft eine Teleskopwelle zur Übertragung von Drehmomenten, umfassend ein inneres Profilrohr, ein mittleres Profilrohr und ein äußeres Profilrohr, die zur Längenänderung verschiebbar zueinander angeordnet sind, wobei ein Zugelement in dem mittleren Profilrohr axial unverschieblich gehalten ist.

Mehrteilige Teleskopwellen sind im Stand der Technik bekannt. Bei diesen stellt sich das Problem, wie bei einem Auszug des inneren Profilrohrs gegenüber dem mittleren Profilrohr das mittlere Profilrohr, nachdem das innere Profilrohr eine gewisse Strecke gegenüber diesem ausgezogen wurde, mitbewegt werden kann, um gegenüber dem äußeren Profilrohr auszuziehen. Hierfür kann ein Zugdraht Verwendung finden, der mit seinem einen Ende an einem axialen Ende des inneren Profilrohr befestigt ist, durch dieses hindurchgeführt ist und mit seinem anderen Ende an einem axialen Ende des mittleren Profilrohrs befestigt ist. Im zusammengefahrenen Zustand der Teleskopwelle liegt der Zugdraht lose in dem inneren Profilrohr, d.h. seine Länge ist größer als der axiale Abstand der Befestigungen an den jeweiligen Profilrohren. Somit kann das innere Profilrohr um ein gewisses Maß gegenüber dem mittleren Profilrohr herausgezogen werden, bevor der Zugdraht straff gezogen ist und das mittlere Profilrohr mitzieht. Das Problem dieser Kopplung ist die mangelnde Robustheit des Zugdrahtes, der den auftretenden Belastungen nach einer gewissen Gebrauchsdauer nicht mehr Stand hält.

Aus der DE 33 34 709 C2 ist eine Teleskopwelle mit einem äußeren und einem inneren Profilrohr bekannt. Innerhalb der beiden Profilrohre sind ein innerer Zuganker und ein äußerer Zuganker angeordnet, die jeweils über Rastkörper zu einem der Profilrohre lösbar verbunden sind. Der innere Zuganker weist diametral gegenüberliegende Längsschlitze auf, in denen ein Fangbolzen geführt ist, der mit dem äußeren Zuganker verbunden ist. Der Fangbolzen durchwandert die Längschlitze, wenn die Teleskopwelle auseinandergezogen wird. Ein weiteres Auseinanderziehen ist möglich, indem die Rastkörper zwischen den Zugankern und dem jeweiligen Profilrohr in eine ausgezogene Raststellung wandern. Im auseinandergezogenen Zustand kann die Teleskopwelle kein Drehmoment übertragen.

Gemäß dem Oberbegriff des Anspruchs 1 offenbart die US 73 914 eine dreiteilige Teleskopwelle mit Mitteln, die sicherstellen, dass ein mittleres Profilrohr herausgezogen werden kann.

Aufgabe der vorliegenden Erfindung ist es, eine Teleskopwelle bereitzustellen, die im ausgezogenen Zustand Drehmoment übertragen kann und deren Kopplung der Profilrohre robust im Hinblick auf die auftretenden Belastungen ist.

Die Aufgabe wird gelöst durch eine Teleskopwelle zur Übertragung von Drehmomenten, umfassend ein inneres Profilrohr, ein mittleres Profilrohr und ein äußeres Profilrohr, die zur Längenänderung verschiebbar zueinander angeordnet sind, wobei ein Zugelement mit zumindest einem axialen Langloch in dem mittleren Profilrohr axial unverschiebbar gehalten ist und wobei Eingriffsmittel mit dem inneren Profilrohr verbunden sind und die Eingriffsmittel in das zumindest eine axiale Langloch des Zugelements zur Begrenzung eines Verschiebeweges zwischen dem inneren Profilrohr und dem Zugelement eingreifen.

Der Vorteil dieser erfindungsgemäßen Ausgestaltung besteht darin, dass durch die Befestigung des Zugelements zu seiner einen Seite an dem mittleren Profilrohr und durch den Eingriff der Eingriffsmittel des inneren Profilrohrs in das Langloch des Zugelements eine robuste und belastbare Verbindung zwischen dem inneren und dem mittleren Profilrohr erzielt wird. Weiterhin ist von Vorteil, dass die Herstellung eines Langlochs fertigungstechnisch einfach zu realisieren ist, wobei dennoch das Zugelement bezüglich der kritischen Zugbelastungen nicht in einem erheblichen Maße geschwächt ist. Weiterhin kann für die Anfertigung des Zugelements auf allseits verfügbare Norm- oder Meterware zurückgegriffen werden.

Bevorzugt umfasst das Zugelement ein Rohr mit einem runden Querschnitt. Ein geringes Gewicht des Zugelements gegenüber einem vollen Querschnitt ist somit gewährleistet. Ein runder Querschnitt ist vorteilhaft, da somit keine passgenaue Anpassung an die Profilierung der Profilrohre erfolgen muss.

In konkreter Ausgestaltung des rohrförmigen Zugelements sind zwei beidseitig gegenüberliegende axiale Langlöcher vorgesehen. Vorteilhaft ist hier die Rotationssymmetrie des Zugelements. Bevorzugt greifen die Eingriffsmittel diametral durch die axialen Langlöcher. Hierdurch ist in vorteilhafter Weise gewährleistet, dass die Eingriffsmittel zu beiden axialen Seiten dieses Durchgriffs durch das Zugelement mit dem inneren Profilrohr verbunden bzw. an diesem befestigt werden können.

Das Zugelement kann ein Rohr umfasst bzw. aus einem Rohr gefertigt sein, in dessen Wandung das mindestens eine Langloch eingebracht ist. Alternativ kann das Zugelement zwei axial ausgerichtete parallel zueinander angeordnete Zugstangen umfasst, z.B. aus Flachstahl, die an ihren axialen Enden über Abschlusselemente einen Rohrabschnitt bildend miteinander verbunden sind. Hierbei können die Abschlusselemente selbst rohrförmig gestaltet sein, die mit den Enden der Zugstangen verbunden sind, und/oder schalenförmig gestaltet sein, um zusammen mit den Zugstangen einen rohrförmigen Abschnitt zu bilden.

Bevorzugt umfassen die Eingriffsmittel einen ersten Spannstift. In weiterhin bevorzugter Ausgestaltung ist das Zugelement über einen zweiten Spannstift gegenüber dem mittleren Profilrohr gehalten. In vorteilhafter Weise kann somit bezüglich der Eingriffsmittel auf allseits verfügbare Normteile zurückgegriffen werden.

In Konkretisierung ist vorgesehen, dass der zweite Spannstift in Spannstiftbohrungen jeweils des mittleren Profilrohrs und des Zugelements, welches bevorzugt rohrförmig ausgebildet ist, einsitzt. Eine derartige Verbindung ist fertigungstechnisch einfach darzustellen.

Bevorzugt sitzt das innere Profilrohr zwischen dem Zugelement und dem mittleren Profilrohr verschiebbar ein. Als Vorteil ist bezüglich dieser Anordnung zu nennen, dass sich das Zugelement ohne größeren Aufwand in bestehende mehrteilige Teleskopwellen nachrüsten lässt.

In weiterer Ausgestaltung der Erfindung verläuft eine erste Radialachse der Spannstiftbohrung in dem Zugelement abweichend von einem rechten Winkel zu einer axialen Ebene, die durch das zumindest eine axiale Langloch und eine Längsachse der Teleskopwelle aufgespannt wird. Bevorzugt verläuft eine zweite Radialachse der Spannstiftbohrung in dem mittleren Profilrohr abweichend von einem rechten Winkel zu einer axialen Ebene, die durch das zumindest eine axiale Langloch und eine Längsachse der Teleskopwelle aufgespannt wird. Insbesondere ist bevorzugt, dass die erste und die zweite Radialachse der Spannstiftbohrungen aufeinanderliegen.

Die Aufgabe wird ferner gelöst durch eine Gelenkwelle mit einer erfindungsgemäßen Teleskopwelle, wobei ein erstes Gelenk mit dem inneren Profilrohr drehfest verbunden ist und ein zweites Gelenk mit dem äußeren Profilrohr drehfest verbunden ist. Bevorzugt handelt es sich bei den Gelenken jeweils um Kreuzgelenke.

Im folgenden wird die erfindungsgemäße Teleskopwelle anhand der Figuren beschrieben. Hierin zeigt
- Figur 1a: einen Längsschnitt durch die erfindungsgemäße Teleskopwelle,
- Figur 1b: einen Querschnitt entlang der Schnittlinie I-I in Figur 1a,
- Figur 2: das Zugelement der Teleskopwelle gemäß Figur 1 a und
- Figur 3: ein alternatives Zugelement.

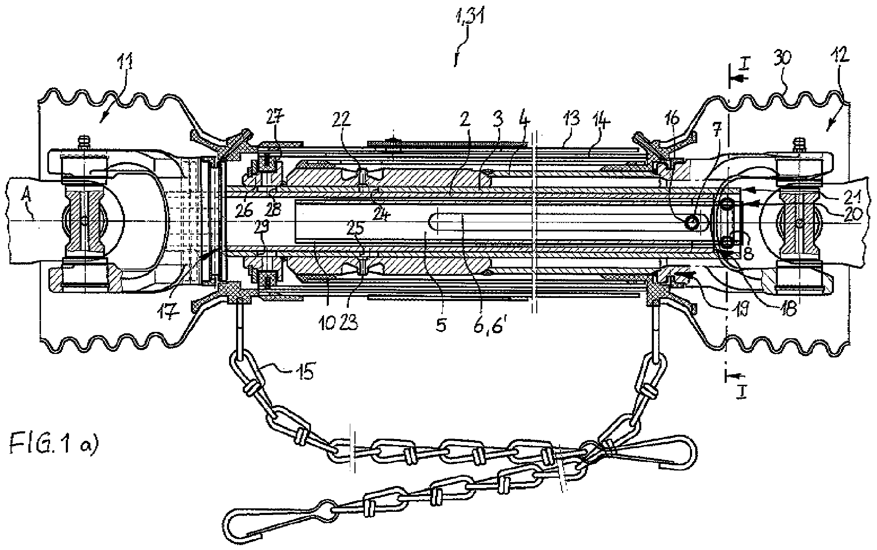

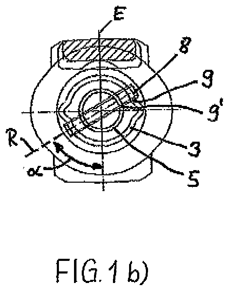

In der Figur 1 ist eine Gelenkwelle 31 mit Kreuzgelenken 11, 12 und einer dreiteilig auseinanderziehbaren Teleskopwelle 1 in vollständig eingeschobenem Zustand dargestellt. Die Teleskopwelle 1 besteht aus einem inneren Profilrohr 2, welches an seinem einen axialen Ende 17 mit dem ersten Kreuzgelenks 11 drehfest verbunden ist, einem äußeren Profilrohr 4, welches an seinem einen axialen Ende 19 mit dem zweiten Kreuzgelenk 12 drehfest verbunden ist, und einem mittleren Profilrohr 3. Die Profilrohre 2, 3, 4 sind teleskopisch ineinandergeschoben, wobei das mittlere Profilrohr 3 zwischen dem inneren Profilrohr 2 und dem äußeren Profilrohr 4 angeordnet ist.

Zum Schutz beispielsweise der Bedienperson vor der drehenden Gelenkwelle 31 ist diese mit einem äußeren Schutzrohr 13 und einem inneren Schutzrohr 14 versehen, die beide zum Längenausgleich teleskopisch ineinander gesteckt sind. Jedes Schutzrohr 13, 14 ist im Bereich des jeweiligen Kreuzgelenks 11, 12 an dem äußeren bzw. inneren Profilrohr 4, 2 befestigt. Die Schutzrohre 13, 14 sind mit Ketten 15 gegen Verdrehen gesichert.

Innerhalb des inneren Profilrohrs 2 ist ein Zugelement in Form einer Zugstange 5 angeordnet, welche ein Rohr 10 umfasst. Die Zugstange 5 steht axial über das axiale Ende 18 des inneren Profilrohrs 2 über, welches der an dem inneren Profilrohr 2 befestigten Kreuzgelenk 11 abgewandt ist. In diesem überstehende Bereich ist die Zugstange 5 mittels eines zweiten Spannstifts 8 an dem mittleren Profilrohr 3 gehalten. Hierzu sitzt der zweite Spannstift 8 in Spannlochbohrungen 9, 9' des mittleren Profilrohrs 3 und der Zugstange 5 ein, wie in der Figur 1 b zu erkennen ist. Die Spannlochbohrungen 9 haben von dem axialen Ende 21 des mittleren Profilrohrs 3 etwa einen Abstand von 10 mm und die Spannlochbohrungen 9' haben von dem axialen Ende 20 der Zugstange 5 etwa einen Abstand von 10 mm.

In der Figur 1 b ist zu erkennen, dass der zweite Spannstift 8 bezogen auf eine axiale Ebene E unter einem Winkel α von 60° in dem mittleren Profilrohr 3 und der Zugstange 5 in den Spannlochbohrungen 9, 9' einsitzt. Andere Winkel α können ebenso vorgesehen werden. Zu erkennen ist ferner die Profilierung des mittleres Profilrohrs 3, die entsprechend bei dem inneren Profilrohr 2 und dem äußeren Profilrohr ausgebildet ist und über deren formschlüssigen Eingriff ein Drehmoment übertragen werden kann. Die Zugstange 5 weist einen runden Querschnitt auf.

Die Zugstange 5 weist zwei diametral gegenüberliegende axiale Langlöcher 6, 6' auf, von denen in der Figur 1a nur das Langloch 6 zu erkennen ist. Von dem axialen Ende 20 der Zugstange 5 haben die axialen Langlöcher 6, 6' etwa einen Abstand von 25 mm. Durch die beiden axialen Langlöcher 6, 6' greifen Eingriffsmittel in Form eines ersten Spannstifts 7 radial hindurch. Der erste Spannstift 7 ist in Spannstiftbohrungen 16 des inneren Profilrohrs 2 gehalten. Die Spannstiftbohrungen 16 haben von dem axialen Ende 18 des inneren Profilrohrs 2 etwa einen Abstand von 15 mm. Bei der Darstellung in der Figur 1 b ist zu beachten, dass die Zugstange 5 mit den axialen Langlöchern 6, 6' und der erste Spannstift 7 gegenüber der restlichen Darstellung um 90° gedreht dargestellt sind, d.h. realiter verläuft die Radialachse des ersten Spannstifts 7 in der Zeichnungsebene, d.h. verglichen mit dem zweiten Spannstift 8 demnach nicht winklig zu der axialen Ebene E, welche in Figur 1 b eingezeichnet ist.

Bei einer Ausziehbewegung des Teleskopwelle 1 wird das innere Profilrohr 2 zunächst gegenüber dem mittleren Profilrohr 3 und der mit dem mittleren Profilrohr 3 verbundenen Zugstange 5 herausgezogen. Hierbei durchläuft der erste Spannstift 7, der mit dem inneren Profilrohr 2 verbunden ist, die axialen Langlöcher 6, 6' der Zugstange 5. In dem Augenblick, in dem der erste Spannstift 7 die axialen Langlöcher vollständig durchlaufen hat, d.h. anschlägt, besteht in Auszugsrichtung über den ersten Spannstift 7 und die Zugstange 5 eine formschlüssige Verbindung zwischen dem inneren Profilrohr 2 und dem mittleren Profilrohr 3, so dass eine weitere Ausziehbewegung der Teleskopwelle 1 über ein Ausziehen des mittleren Profilrohrs 3 gegenüber dem äußeren Profilrohr 4 stattfindet. Durch den Eingriff des ersten Spannstifts 7, der mit dem inneren Profilrohr 2 verbunden ist, in die axialen Langlöcher 6, 6' der Zugstange 5 wird der Verschiebeweg zwischen dem inneren Profilrohr 2 und der Zugstange 5 begrenzt. Das Einschieben der Teleskopwelle 1 erfolgt in umgekehrter Reihenfolge oder alternativ, indem zuerst das innere Profilrohr 2 gegenüber der Zugstange 5 einschiebt, wobei der erste Spannstift 7 die axialen Langlöcher 6, 6' durchläuft, und anschließend das mittlere Profilrohr 3 von der Zugstange 5 mitgenommen wird und gegenüber dem äußeren Profilrohr 4 einschiebt.

Die Schmierung des Schutzlaufrings 27 des äußeren Schutzrohrs 13 auf dem Lagerring 26 des mittleren Profilrohrs 3 erfolgt über Schmiernippel 22, 23, Bohrungen 24, 25 und Bohrungen 28, 29 in der Axialebene des Lagerrings 24 in dem mittleren Profilrohr 3.

Zur Montage des zweiten Spannstifts 8 ist eine nicht dargestellte Bohrung auf dem Umfang der Manschette 30 des Schutzrohrs 14 vorgesehen.

Bei dieser erfindungsgemäßen Lösung einer Zugstange 5, die eine formschlüssige Verbindung zwischen dem inneren Profilrohr 2 und dem mittleren Profilrohr 3 bildet, wird eine robuste Ausziehmechanik für eine Gelenkwelle 31 mit einer mehrteiligen Teleskopwelle 1 bereitgestellt.

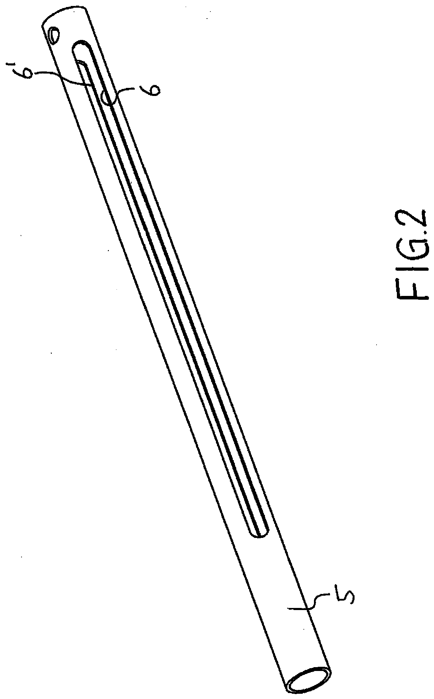

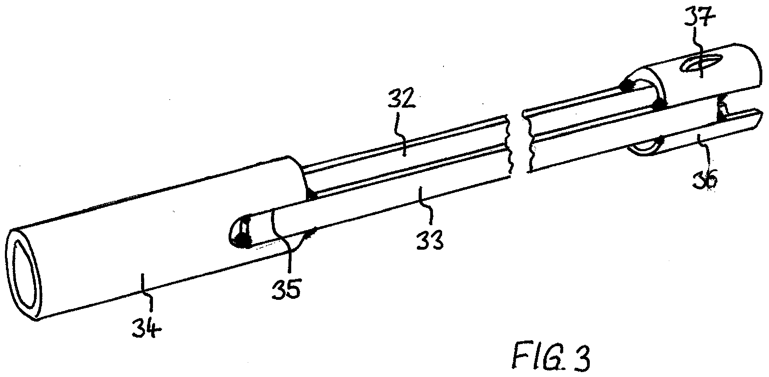

Figur 2 zeigt beispielhaft ein Zugelement 5 mit den beiden axialen Langlöchern 6, 6'. Alternativ kann das Zugelement gemäß Figur 3 aufgebaut sein, wobei dieses nicht aus einem Rohr hergestellt ist, in das Langlöcher eingebracht sind. Bei der Ausführungsform gemäß Figur 3 handelt es sich um ein gebautes Zugelement mit zwei im Querschnitt rechteckigen Zugstangen 32, 33, die parallel zueinander verlaufen. An einem ihrer Enden sind die Zugstangen 32, 33 mit einem rohrförmigen Abschlusselement 34 verschweißt. Hierfür weist das Abschlusselement 34 an einem seiner Enden stirnseitig zwei Schlitze 35 auf, in die die Enden der Zugstangen 32, 33 eingesetzt sind. Die Schlitze 35 verlaufen über einen Teil der Länge des Abschlusselements 34 und durchdringen die gesamte Wandstärke desselben. Grundsätzlich reichen jedoch auch Nuten in der Außenumfangsfläche des Abschlusselements 34, sofern das Abschlusselement 34 eine dickere Wandstärke aufweist als die Zugstangen 32, 33. Im vorliegenden Fall ist die Wanddicke des Abschlusselements 34 identisch zu der der Zugstangen 32, 33.

Ein solches Abschlusselement kann auch an den anderen Enden der Zugstangen 32, 33 vorgesehen sein. Alternativ, wie hier dargestellt, sind zwei schalenförmige Abschlussteile 36, 37 vorgesehen, die derart mit den Zugstangen 32, 33 verbunden sind, dass sie gemeinsam ein rohrförmiges Abschlusselement bilden. Diese Art der Anbindung kann auch anstelle des Abschlusselements 34 am anderen Ende vorgesehen sein.

### Bezugszeichenliste

- 1: Teleskopwelle
- 2: inneres Profilrohr
- 3: mittleres Profilrohr
- 4: äußeres Profilrohr
- 5: Zugelement
- 6; 6': axiales Langloch
- 7: Eingriffsmittel, erster Spannstift
- 8: zweiter Spannstift
- 9, 9': Spannstiftbohrung
- 10: Rohr
- 11: Kreuzgelenk
- 12: Kreuzgelenk
- 13: Schutzrohr
- 14: Schutzrohr
- 15: Kette
- 16: Spannstiftbohrung
- 17: axiales Ende
- 18: axiales Ende
- 19: axiales Ende
- 20: axiales Ende
- 21: axiales Ende
- 22: Schmiernippel
- 23: Schmiernippel
- 24: Bohrung
- 25: Bohrung
- 26: Lagerring
- 27: Schutzlaufring
- 28: Bohrung
- 29: Bohrung
- 30: Manschette
- 31: Gelenkwelle
- 32: Zugstange
- 33: Zugstange
- 34: Abschlusselement
- 35: Schlitz
- 36: Abschlussteil
- 37: Abschlussteil

- E: axiale Ebene
- R: Radialachse

## Patentansprüche

1. Teleskopwelle (1) zur Übertragung von Drehmomenten, umfassend ein inneres Profilrohr (2), ein mittleres Profilrohr (3) und ein äußeres Profilrohr (4), die zur Längenänderung verschiebbar zueinander angeordnet sind, wobei Eingriffsmittel (7) mit dem inneren Profilrohr (2) verbunden sind,
**dadurch gekennzeichnet,**
**dass** ein Zugelement (5) mit zumindest einem axialen Langloch (6) in dem mittleren Profilrohr (3) axial unverschiebbar gehalten ist und
die Eingriffsmittel (7) in das zumindest eine axiale Langloch (6) des Zugelements (5) zur Begrenzung eines Verschiebeweges zwischen dem inneren Profilrohr (2) und dem Zugelement (5) eingreifen.

2. Teleskopwelle (1) nach Anspruch 1,
**dadurch gekennzeichnet,**
**dass** zwei beidseitig gegenüberliegende axiale Langlöcher (6, 6') vorgesehen sind.

3. Teleskopwelle (1) nach Anspruch 2,
**dadurch gekennzeichnet,**
**dass** die Eingriffsmittel (7) durch die axialen Langlöcher (6, 6') diametral durchgreifen.

4. Teleskopwelle (1) nach einem der Ansprüche 1 bis 3,
**dadurch gekennzeichnet,**
**dass** das Zugelement (5) ein Rohr (10) umfasst, in dessen Wandung das mindestens eine Langloch eingebracht ist.

5. Teleskopwelle (1) nach einem der Ansprüche 1 bis 3,
**dadurch gekennzeichnet,**
**dass** das Zugelement (5) zwei axial ausgerichtete parallel zueinander angeordnete Zugstangen (32, 33) umfasst, die an ihren axialen Enden über Abschlusselemente (34) einen Rohrabschnitt bildend miteinander verbunden sind.

6. Teleskopwelle (1) nach einem der Ansprüche 1 bis 5,
**dadurch gekennzeichnet,**
**dass** die Eingriffsmittel einen ersten Spannstift (7) umfassen.

7. Teleskopwelle (1) nach einem der Ansprüche 1 bis 6,
**dadurch gekennzeichnet,**
**dass** das Zugelement (5) über einen zweiten Spannstift (8) gegenüber dem mittleren Profilrohr (3) gehalten ist.

8. Teleskopwelle (1) nach Anspruch 7,
**dadurch gekennzeichnet,**
**dass** der zweite Spannstift (8) in Spannstiftbohrungen (9, 9') jeweils des mittleren Profilrohrs (3) und des Zugelements (5) einsitzt.

9. Teleskopwelle (1) nach einem der Ansprüche 1 bis 8,
**dadurch gekennzeichnet,**
**dass** das innere Profilrohr (2) zwischen dem Zugelement (5) und dem mittleren Profilrohr (3) verschiebbar einsitzt.

10. Teleskopwelle (1) nach Anspruch 8 oder Anspruch 9, wenn abhängig von Anspruch 8,
**dadurch gekennzeichnet,**
**dass** eine erste Radialachse (R) der Spannstiftbohrung (9') in dem Zugelement (5) abweichend von einen rechten Winkel zu einer axialen Ebene verläuft, die durch das zumindest eine axiale Langloch (6) und eine Längsachse (A) der Teleskopwelle (1) aufgespannt wird.

11. Teleskopwelle (1) nach Anspruch 8 oder einem der Ansprüche 9 und 10, wenn abhängig von Anspruch 8,
**dadurch gekennzeichnet,**
**dass** eine zweite Radialachse (R) der Spannstiftbohrung (9) in dem mittleren Profilrohr (3) abweichend von einen rechten Winkel zu einer axialen Ebene (E) verläuft, die durch das zumindest eine axiale Langloch (6) und eine Längsachse (A) der Teleskopwelle (1) aufgespannt wird.

12. Gelenkwelle (31) mit einer Teleskopwelle (1) nach einem der vorangegangenen Ansprüche, wobei ein erstes Gelenk (11) mit dem inneren Profilrohr (2) drehfest verbunden ist und ein zweites Gelenk (12) mit dem äußeren Profilrohr (4) drehfest verbunden ist.

## Claims

1. Telescopic shaft (1) for transmitting torques, comprising
an inner profile tube (2), an intermediate profile tube (3) and an outer profile tube (4), which are displaceably arranged to each other for length adjustment, wherein engagement means (7) are connected to the inner profile tube (2), **characterised in**
**that** a connection element (5) with at least one axial elongated hole (6) is axially held non-displaceably in the intermediate profile tube (3) and the engagement means (7) engage in the at least one axial elongated hole (6) of the connection element (5) for limiting a displacement path between the inner profile tube (2) and the connection element (5).

2. Telescopic shaft (1) according to claim 1,
**characterised in**
**that** two axial elongated holes (6, 6') are arranged opposite to each other.

3. Telescopic shaft (1) according to claim 2,
**characterised in**
**that** the engagement means (7) are diametrically engaged through the axial elongated holes (6, 6').

4. Telescopic shaft (1) according to one of claims 1 to 3,
**characterised in**
**that** the connection element (5) comprises a tube (10) having a wall provided with the at least one elongated hole.

5. Telescopic shaft (1) according to one of claims 1 to 3,
**characterised in**
**that** the connection element (5) comprises two connection rods (32, 33), which are axially aligned and arranged parallel to each other and which are connected to each other at their axial ends via end pieces (34), forming a tube portion.

6. Telescopic shaft (1) according to one of claims 1 to 5,
**characterised in**
**that** the engagement means comprise a first locking pin (7).

7. Telescopic shaft (1) according to one of claims 1 to 6,
**characterised in**
**that** the connection element (5) is held via a second locking pin (8) relative to the intermediate profile tube (3).

8. Telescopic shaft (1) according to claim 7,
**characterised in**
**that** the second locking pin (8) rests in locking pin bores (9, 9'), respectively, of the intermediate profile tube (3) and of the connection element (5).

9. Telescopic shaft (1) according to one of claims 1 to 8,
**characterised in**
**that** the inner profile tube (2) rests displaceably between the connection element (5) and the intermediate profile tube (3).

10. Telescopic shaft (1) according to claim 8 or claim 8, if dependent on claim 9,
**characterised in**
**that** a first radial axis (R) of the locking pin bore (9') extends in the connection element (5) at an angle which diverts from a right angle to an axial plane, which axial plane is formed by the at least one axial elongated hole (6) and a longitudinal axis (A) of the telescopic shaft (1).

11. Telescopic shaft (1) according to claim 8 or one of claims 9 and 10, if dependent on claim 8,
**characterised in**
**that** a second radial axis (R) of the locking pin bore (9) extends in the intermediate profile tube (3) at an angle, which diverts from a right angle to an axial plane (E), which axial plane is formed by the at least one axial elongated hole (6) and a longitudinal axis (A) of the telescopic shaft (1).

12. Universal joint shaft (31) with a telescopic shaft (1) according to one of the preceding claims, wherein a first joint (11) is non-rotationally connected to the inner profile tube (2) and a second joint (12) is non-rotationally connected to the outer profile tube (4).

## Revendications

1. Arbre télescopique (1), destiné à transmettre des couples de rotation, comprenant un tube profilé (2) interne, un tube profilé (3) central et un tube profilé (4) externe, qui pour faire varier la longueur sont placés en étant déplaçables l'un par rapport à l'autre, des moyens d'engagement (7) étant assemblés avec le tube profilé (2) interne, **caractérisé**
**en ce qu'**un élément de traction (5) avec au moins un trou oblong (6) axial est maintenu en étant indéplaçable en direction axiale dans le tube profilé (3) central et pour délimiter une course de déplacement entre le tube profilé (2) interne et l'élément de traction (5), les moyens d'engagement (7) s'engagent dans l'au moins un trou oblong (6) axial de l'élément de traction (5).

2. Arbre télescopique (1) selon la revendication 1,
**caractérisé en ce que** deux trous oblongs (6, 6') axiaux opposés de part et d'autre sont prévus.

3. Arbre télescopique (1) selon la revendication 2,
**caractérisé en ce que** les moyens d'engagement (7) traversent diamétralement les trous oblongs (6, 6') axiaux.

4. Arbre télescopique (1) selon l'une quelconque des revendications 1 à 3,
**caractérisé en ce que** l'élément de traction (5) comprend un tube (10) dans les parois duquel est ménagé l'au moins un trou oblong.

5. Arbre télescopique () selon l'une quelconque des revendications 1 à 3,
**caractérisé en ce que**
l'élément de traction (5) comprend deux barres de traction (32, 33) orientées en direction axiale, placées à la parallèle l'une de l'autre, qui sur leurs extrémités axiales sont assemblées l'une avec l'autre, par l'intermédiaire d'éléments de terminaison (34), en formant un tronçon de tube.

6. Arbre télescopique (1) selon l'une quelconque des revendications 1 à 5,
**caractérisé en ce que** les moyens d'engagement comprennent une première goupille de serrage (7) ;

7. Arbre télescopique (1) selon l'une quelconque des revendications 1 à 6,
**caractérisé en ce que** l'élément de traction (5) est maintenu par l'intermédiaire d'une deuxième goupille de serrage (8) par rapport au tube profilé (3) central.

8. Arbre télescopique (1) selon la revendication 7,
**caractérisé en ce que** la deuxième goupille de serrage (8) est logée dans des perçages (9, 9') pour goupille de serrage respectivement du tube profilé (3) central et de l'élément de traction (5).

9. Arbre télescopique (1) selon l'une quelconque des revendications 1 à 8,
**caractérisé en ce que** le profilé interne (2) est logé en étant déplaçable entre l'élément de traction (5) et le tube profilé (3) central.

10. Arbre télescopique (1) selon la revendication 8 ou la revendication 9,
**caractérisé en ce qu'**un premier axe radial (R) du perçage (9') pour goupille de serrage s'écoule dans l'élément de traction (5) en se différenciant d'un angle droit par rapport au plan axial, qui est défini par l'au moins un trou oblong (6) axial et un axe longitudinal (A) de l'arbre télescopique (1).

11. Arbre télescopique (1) selon la revendication 8 ou l'une quelconque des revendications 9 et 10, si elles dépendent de la revendication 8,
**caractérisé en ce qu'**un deuxième axe radial (R) du perçage (9) pour goupille de serrage s'écoule dans le tube profilé (3) central en se différenciant d'un angle droit par rapport à un plan axial (E), qui est défini par l'au moins un trou oblong (6) axial et un axe longitudinal (A) de l'arbre télescopique (1).

12. Arbre articulé (31) avec un arbre télescopique (1) selon l'une quelconque des revendications précédentes, une première articulation (11) étant assemblée de manière solidaire en rotation avec le tube profilé (2) interne et une deuxième articulation (12) étant assemblée de manière solidaire en rotation avec le tube profilé (4) externe.
